# EUROPÄISCHE PATENTANMELDUNG

(11) **EP 4 650 726 A1**
(43) Veröffentlichungstag der Anmeldung: **19.11.2025**
(21) Anmeldenummer: 24176374.7
(22) Anmeldetag: 16.05.2024
(51) Int. Cl.: G01F 11/24

(54) **WALZENDOSIERER**

(71) Anmelder: Harro Höfliger Verpackungsmaschinen GmbH, 71573 Allmersbach im Tal (DE)
(72) Erfinder: Puppich, Thomas, 71573 Allmersbach im Tal (DE); Dietz, Lena, 71573 Allmersbach im Tal (DE); Wurst, Reiner, 71573 Allmersbach im Tal (DE); Wall, Thomas, 71573 Allmersbach im Tal (DE)
(74) Vertreter: Zurhorst, Stefan

(57) **Zusammenfassung**

Die Erfindung betrifft einen Walzendosierer (3) zur Erzeugung einzelner Dosiermengen (2) eines pulvrigen Produkts (1). Der Walzendosierer (3) umfasst einen in einer Füllposition (I) angeordneten Produktvorrat (4), eine Dosierwalze (5), und einen Drehantrieb (M) für die Dosierwalze (5). Die Dosierwalze (5) weist umfangsseitig verteilt Dosieröffnungen (7, 7') auf. Mindestens zwei in einer Umfangsrichtung (U) der Dosierwalze (5) zueinander beabstandete Dosieröffnungen (7, 7') sind zu einem gemeinsamen Dosierabschnitt (12) zusammengefasst. Der Drehantrieb (M) ist für eine getaktete Drehung der Dosierwalze (5) um eine Drehachse (19) derart ausgelegt, dass ein einzelner Dosierabschnitt (12) mit den zugehörigen Dosieröffnungen (7, 7') zyklisch zumindest in der Füllposition (I) und in einer Ausstoßposition (III) zu liegen kommt.

## Beschreibung

Die Erfindung betrifft einen Walzendosierer nach dem Oberbegriff des Anspruchs 1.

Beispielsweise im Pharmabereich, aber auch im Bereich von Nahrungsergänzungsmitteln oder dgl. werden Pulver verarbeitet, die für die vorgesehene Darreichungsform in präzise abgemessenen Teilmengen bzw. Dosiermengen bereitgestellt werden müssen. Zielbehälter beispielsweise in Form von Blistern, Steckkapseln oder dergleichen werden mit solchen abgemessenen Dosiermengen eines pulvrigen Produkts befüllt, so dass der Verbraucher entsprechende Einheitsdosen zur Verfügung hat und einnehmen kann.

Derartige pulvrige Produkte werden insbesondere auf sogenannten Walzendosierern in einzeln abgemessene Dosiermengen überführt, welche dann in jeweilig zugeordneten Zielbehältern abgefüllt werden. Ein solcher Walzendosierer umfasst einen Produktvorrat, eine Dosierwalze und einen Drehantrieb für die Dosierwalze.

Die Dosierwalze weist umfangsseitig verteilt mehrere Dosieröffnungen auf. Die Dosierwalze wird um eine Drehachse getaktet gedreht, sodass eine einzelne Dosieröffnung oder eine achsparallele Reihe davon in verschiedenen Positionen zu liegen kommt. In einer ersten Position hiervon, nämlich in einer Füllposition befindet sich ein Produktvorrat. In der Füllposition wird aus dem Produktvorrat beispielsweise unter Einwirkung von Unterdruck das pulvrige Produkt in die Reihe von Dosieröffnungen eingesaugt. Dabei bilden sich Dosiermengen des Pulvers, deren Volumen dem Volumen der jeweiligen Dosieröffnung entspricht. Nach dem Füllvorgang wird die Dosierwalze getaktet soweit weitergedreht, dass die Reihe der zuvor befüllten Dosieröffnungen nun im Bereich einer Ausstoßposition zu liegen kommt. Dort werden dann die zuvor gebildeten Dosiermengen beispielsweise mittels Überdruck aus den Dosieröffnungen ausgestoßen und zum Zielbehälter weitergeleitet.

Üblicherweise sind solche Dosierwalzen mit mehreren, gleichmäßig über den Umfang verteilten und achsparallelen Reihen von Dosieröffnungen versehen. Angepasst an den Umfangsabstand solcher individuellen Reihen von Dosieröffnungen sind die Füllposition, die Ausstoßposition und eventuell noch weitere Positionen wie eine Prüfposition, eine Reinigungsposition oder dergleichen positioniert. Hierdurch wird erreicht, dass eine Reihe von Dosieröffnungen befüllt wird, während zeitglich eine weitere Reihe von Dosieröffnungen geprüft, entleert oder gereinigt wird. Bei jedem dieser getakteten Vorgänge wird also immer eine achsparallele Reihe von Dosieröffnungen in ihrer Gesamtheit dem jeweiligen Prozessschritt unterzogen.

Derartige Walzendosierer sind insbesondere für die Dosierung von Kleinmengen geeignet, wobei die Zielbehälter an der Ausstoßposition ebenso wie die Reihe der zugeordneten Dosieröffnungen in einer achsparallelen Reihe positioniert werden können. Eine solche Walzendosierung hat sich inzwischen auch für schwierig zu dosierende Pulver bewährt. Bei Hochgeschwindigkeits-Füllmaschinen mit hoher Kapazität wird jedoch eine mehrreihige, typischerweise eine zweireihige Anordnung der Zielbehälter angestrebt. Beispielsweise bei Kapselfüllmaschinen, bei denen die Unterteile von Stecckapseln als Zielbehälter dienen, kommen zweireihige Formatträger mit zwei Reihen von beispielsweise 2 x 12 Kapselunterteilen zum Einsatz. Mit den aus dem Stand der Technik bekannten Walzenfüllern lässt sich immer nur eine Reihe davon in einem Fülltakt befüllen. Bei einem derartigen Anwendungsfall ist also ein zweiter Walzenfüller, eine zweite Dosierstation und gegebenenfalls auch ein zweiter Fülltakt erforderlich. Neben einem erhöhten Investitionsbedarf gibt es vor allem auch einen nicht unerheblichen Bedarf an Bauraum, der unter den beengten Verhältnissen einer Füllmaschine nur mit Schwierigkeiten bereitgestellt werden kann.

Der Erfindung liegt die Aufgabe zugrunde, einen gattungsgemäßen Walzendosierer derart weiterzubilden, dass mehrreihig angeordnete Zielbehälter gleichzeitig mit abgemessenen Dosiermengen befüllt werden können.

Diese Aufgabe wird durch einen Walzendosierer mit den Merkmalen des Anspruchs 1 gelöst.

Nach der Erfindung ist vorgesehen, dass mindestens zwei in einer Umfangsrichtung der Dosierwalze zueinander beabstandete Dosieröffnungen zu einem gemeinsamen Dosierabschnitt zusammengefasst sind. Dabei ist der Drehantrieb für eine getaktete Drehung der Dosierwalze um eine Drehachse derart ausgelegt, dass ein einzelner Dosierabschnitt mit seinen zugehörigen, in der Umfangsrichtung beabstandeten Dosieröffnungen zyklisch zumindest in einer Füllposition und in einer Ausstoßposition zu liegen kommt.

Die erfindungsgemäße Anordnung erlaubt es, dass mehr als eine Reihe und insbesondere zwei Reihen von Zielbehältern mit einem einzigen Walzendosierer innerhalb eines einzigen Arbeitstaktes befüllt werden können. Im Vergleich zu einer einreihigen Anordnung ist praktisch kein zusätzlicher Bauraum erforderlich und auch kein zusätzlicher Zeitbedarf gegeben. Das an sich bewährte Mittel des Walzendosierers steht damit nun uneingeschränkt auch für Füllmaschinen mit hoher Kapazität und Prozessgeschwindigkeit zur Verfügung und kann damit seine Vorteile insbesondere bei der Dosierung von in dieser Hinsicht schwierigen Pulvern ausspielen.

Es kann zweckmäßig sein, die Dosieröffnungen eines Dosierabschnittes radial zur Drehachse der Dosierwalze auszurichten, wobei sie dann wegen ihres Umfangsabstandes einen bestimmten Öffnungswinkel einschließen. In einer bevorzugten Ausführungsform wird hiervon jedoch abgewichen. Vielmehr weist hierbei der Dosierabschnitt eine radial zur Drehachse verlaufende Mittelebene auf, wobei die Dosieröffnungen paarweise beidseitig der Mittelebene angeordnet sind. Dabei weisen die Dosieröffnungen Öffnungsachsen auf, welche parallel zueinander und zur Mittelebene liegen. Unter Verzicht auf eine radiale Ausrichtung der Öffnungsachsen führt die genannte Parallelität dazu, dass die Dosieröffnungen und die zu befüllenden Zielbehälter exakt aufeinander ausgerichtet werden können, und dass die ausgestoßenen Dosiermengen zielgenau die ihnen zugeordneten Zielbehälter erreichen.

Der Produktvorrat ist an der Füllposition mittels einer Ausgabeöffnung zur Dosierwalze hin offen. Dabei weist die Ausgabeöffnung vorteilhaft in der Umfangsrichtung eine Breite auf, welche die in der Umfangsrichtung zueinander beabstandeten Dosieröffnungen überspannt. Hierdurch ist es möglich, analog zum vorstehend beschriebenen mehrreihigen Befüllen der Zielbehälter auch die mehrreihigen Dosieröffnungen eines einzelnen Dosierabschnittes in nur einem einzigen Arbeitstakt zu befüllen.

Zweckmäßig sind im Produktvorrat angrenzend an die Ausgabeöffnung zwei in der Umfangsrichtung zueinander beabstandete Rührer für das Produkt angeordnet. In vorteilhafter Weiterbildung weisen die beiden Rührer parallel zueinander und zur Drehachse liegende Rührachsen auf und sind dabei gegenläufig antreibbar. Hierdurch wird eine Fluidisierung des Pulvervorrats in unmittelbarer Nähe zu den dort positionierten, in Umfangsrichtung beabstandeten Dosieröffnungen erzielt, sodass deren homogene Befüllung erwartet werden darf.

Der Eintrag des Pulverprodukts in die Dosieröffnungen sowie auch dessen Austrag und Überführung in die Zielbehälter kann mechanisch und/oder unter Zuhilfenahme der Gewichtskraft erfolgen. In einer bevorzugten Ausführungsform sind die einzelnen Dosieröffnungen innenseitig mittels eines Filterelements begrenzt und durch das Filterelement hindurch mit einer Unterdruckquelle verbindbar. Vorteilhaft sind sie alternativ oder zusätzlich zur Unterdruckquelle durch das Filterelement hindurch mit einer Überdruckquelle verbindbar. Der Unterdruck erlaubt durch Ansaugen des Pulvers eine gleichmäßige Füllung der Dosieröffnungen und eine Sicherung gegen vorzeitiges Herausfallen. Durch die Verwendung von Überdruck kann ein vollständiges Ausblasen der Pulvermenge ohne Verbleib von Restmengen erreicht werden, sodass sich eine hohe Prozesssicherheit mit wiederholbar abgemessenen Dosiermengen in den Zielbehältern ergibt.

Ein Ausführungsbeispiel der Erfindung ist nachfolgend anhand der Zeichnung näher beschrieben. Es zeigt:

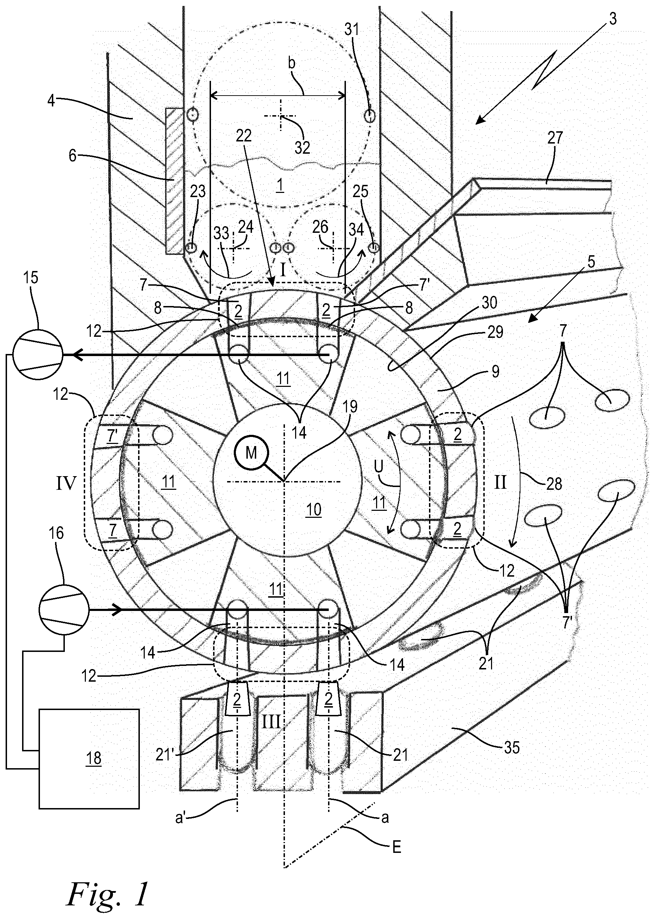

- Fig. 1: in einer schematischen und geschnittenen Perspektivansicht einen Walzendosierer mit insgesamt vier gleichmäßig über den Umfang verteilten Dosierabschnitten und mit zwei Reihen von Dosieröffnungen innerhalb eines jeden Dosierabschnittes.

Fig. 1 zeigt in einer schematischen und perspektivischen Querschnittdarstellung einen Walzendosierer 3 bei der Erzeugung einzelner Dosiermengen 2 eines pulvrigen Produkts 1 und bei der Überführung solcher einzelner Dosiermengen 2 in Zielbehälter 21, 21'. Bei dem pulvrigen Produkt handelt es sich hier um ein pharmazeutisches Pulver. Es kann sich aber auch um ein pulverförmiges Nahrungsergänzungsmittel oder dergleichen handeln. Die Zielbehälter 21, 21' sind hier schematisch angedeutete Kapselunterteile von Steckkapseln, welche nach der Befüllung noch mit aufgesteckten Kapseloberteilten verschlossen werden. Als Zielbehälter 21, 21' kommen aber auch Blister oder andere Behälter in Betracht.

Der Walzendosierer 3 umfasst einen Produktvorrat 4, eine Dosierwalze 5 und einen hier nur schematisch angedeuteten Drehantrieb M für eine getaktete Drehbewegung der Dosierwalze 5 um eine Drehachse 19 in einer durch einen Pfeil 28 angegebenen Drehrichtung. Bei dem Drehantrieb M kann es sich um einen Schrittmotor oder insbesondere um einen Servomotor handeln. Auch andere geeignete Drehantriebe M können in Betracht kommen.

Die Dosierwalze 5 erstreckt sich entlang einer mit der vorstehend genannten Drehachse 19 identischen Längsachse, und ist bezogen auf diese Längsachse im Wesentlichen zylindrisch ausgebildet. Umfangsseitig und über ihren Umfang verteilt weist die Dosierwalze 5 mehrere Dosieröffnungen 7, 7' auf. Mindestens zwei in einer Umfangsrichtung U der Dosierwalze 5 zueinander beabstandete Dosieröffnungen 7, 7' sind zu einem gemeinsamen Dosierabschnitt 12 zusammengefasst. Im gezeigten bevorzugten Ausführungsbeispiel ist die Dosierwalze 5 mit mehreren, hier insgesamt vier gleichmäßig über den Umfang verteilten Dosierabschnitten 12 versehen. Demnach sind vier Dosierabschnitte 12 in Umfangsrichtung um die Drehachse 19 herum in gleichen Winkelabständen, also in 90° zueinander positioniert.

Jeder dieser Dosierabschnitte weist mindestens zwei in der Umfangsrichtung U zueinander beabstandete Dosieröffnungen 7, 7' auf. Mit anderen Worten weist jeder Dosierabschnitt 12 mindestens eine erste Dosieröffnung 7 und mindestens eine zweite Dosieröffnung 7' auf, die beide in der Umfangsrichtung U nicht auf gleicher Position, sondern mit einem Umfangsabstand zueinander liegen. Möglich ist, dass die beiden Dosieröffnungen 7, 7' in Richtung der Längsachse bzw. in Richtung der Drehachse 19 einen Versatz zueinander aufweisen. Vorliegend bilden jeweils zwei Dosieröffnungen 7, 7' ein Paar, welches nur in der Umfangsrichtung U, nicht jedoch in Richtung der Drehachse 19 in einem Abstand zueinander liegt. Im Rahmen der Erfindung kann es ausreichen, dass es in jedem Dosierabschnitt 12 nur ein Paar von Dosieröffnungen 7, 7' gibt. Im gezeigten bevorzugten Ausführungsbeispiel sind in jedem Dosierabschnitt 12 mehrere, hier zwei in der Umfangsrichtung U zueinander beabstandete Reihen von Dosieröffnungen 7, 7' angeordnet. Mit anderen Worten bilden jeweils zwei oder mehr, bevorzugt drei bis zwölf erste Dosieröffnungen 7 eine erste Öffnungsreihe, die achsparallel zur Drehachse 19 verläuft. Analog dazu bilden jeweils zwei oder mehr, bevorzugt drei bis zwölf zweite Dosieröffnungen 7 eine zweite Öffnungsreihe, die achsparallel zur Drehachse 19 und außerdem mit einem in der Umfangsrichtung U gemessenen Abstand zur ersten Reihe von ersten Dosieröffnungen 7 parallel dazu verläuft.

Die Dosieröffnungen 7, 7' weisen jeweils eine Öffnungsachse a, a' auf. Die Öffnungsachsen a, a' können radial zur Drehachse 19 liegen. Vorliegend liegen sie jedoch parallel zueinander und auch parallel zu einer Mittelebene E, wobei die Mittelebene E durch eine mittig durch den jeweiligen Dosierabschnitt 12 verlaufende Radialrichtung R und durch die Drehachse 19 aufgespannt wird. Zudem liegen die Öffnungsachsen a, a' - in einer Projektion auf die Mittelebene E betrachtet - senkrecht zur Drehachse 19.

Die Dosierwalze 5 weist einen zentralen Spannkern 10 und einen den Spannkern 10 mit radialem Abstand umschließenden Walzenmantel 9 auf. Die Dosieröffnungen 7, 7' sind als den Walzenmantel 9 radial durchgreifende Bohrungen mit kreisförmigem Grundriss ausgebildet. Es können aber auch andere Grundrissformen zweckmäßig sein. Beispielsweise kann die Form des Grundrisses lediglich teilweise rund, oval, vieleckig, rechteckig oder quadratisch sein. Radial nach außen, also an einer Außenseite 29 des Walzenmantels 9 sind die Dosieröffnungen 7, 7' offen. Radial nach innen, also an einer Innenseite 30 des Walzenmantels 9 sind sie mittels je eines Filterelements 8 begrenzt, welches in Größe und Form dem Querschnitt der jeweiligen Dosieröffnung 7, 7' entspricht und deren Boden bildet.

Zwischen dem Spannkern 10 und dem Walzenmantel 9 sind Filterleisten 11 angeordnet. Für jeden Dosierabschnitt 12 ist je eine Filterleiste 11 vorgesehen. Die Filterelemente 8 sind gemeinsam durch einen Bogen aus geeignetem Filtermaterial gebildet, welcher um den Spannkern 10 mit den Filterleisten 11 herum gewickelt ist. Es können auch aufgeklebte Filterelemente 8 zum Einsatz kommen. Die Filterleisten 11 sind über einen nicht dargestellten Spannkonus radial nach außen unter Zwischenlage des Filtermaterials gegen die Innenseite 30 des Walzenmantels 9 verspannt.

In den Filterleisten 11 sind jeweils verzweigte Druckkanäle 14 ausgebildet, welche durch die Filterelemente 8 hindurch in korrespondierende Dosieröffnungen 7, 7' hinein münden. Die Druckkanäle 14 einer jeden Filterleiste 11 können unabhängig von den Druckkanälen 14 der anderen Filterleisten 11 mit einem gewünschten Druck in weiter unten näher beschriebener Weise beaufschlagt werden. Hierdurch und durch das jeweilige Filterelement 8 hindurch werden auch die Dosieröffnungen 7, 7' mit diesem Druck beaufschlagt. In allen Dosieröffnungen 7, 7' eines jeweiligen Dosierabschnittes 12 stellt sich der gleiche Druck ein, aber unabhängig vom Druck in den Dosieröffnungen 7, 7' der jeweils anderen Dosierabschnitte 12.

Die Dosierwalze 5 ist um die Drehachse 19 drehbar gelagert. Im Betrieb wird die Dosierwalze mittels des Drehantriebs M in Richtung des Pfeils 17 derart getaktet gedreht, dass die einzelnen Dosierabschnitte 12 in mindestens zwei Takten zyklisch in einer in Gewichtskraftrichtung oberen Füllposition I und in einer in Gewichtskraftrichtung unteren Ausstoßposition III zu liegen kommen. Im gezeigten Ausführungsbeispiel durchlaufen die einzelnen Dosierabschnitte 12 mit ihren Paaren von Dosieröffnungen 7, 7' in vier Takten zyklisch vier verschiedene Positionen, beginnend mit der oberen Füllposition I, gefolgt von einer ersten Zwischenposition II. Danach folgen die untere Ausstoßposition III und eine zweite Zwischenposition IV, bevor der Zyklus an der oberen Füllposition I wieder beginnt.

In der oberen Füllposition I befindet sich der Produktvorrat 4, in welchem eine ausreichende Vorratsmenge des zu dosierenden pulvrigen Produkts 1 bereitgehalten wird. Dort werden die jeweiligen ersten Dosieröffnungen 7 und auch die jeweiligen zweiten Dosieröffnungen 7' des betreffenden Dosierabschnittes 12 mit dem pulvrigen Produkt 1 unter Bildung jeweils einer Dosiermenge 2 aus dem Produktvorrat 4 heraus befüllt. Hierzu ist der Produktvorrat 4 an der Füllposition I mittels einer Ausgabeöffnung 22 zur Dosierwalze 5 hin offen. Die Ausgabeöffnung 22 weist in der Umfangsrichtung U eine Breite b auf, welche die in der Umfangsrichtung U zueinander beabstandeten Dosieröffnungen 7, 7' des aktuell dort befindlichen einen Dosierabschnittes 12 überspannt. Im Bereich eines Randes der Ausgabeöffnung 22 befindet sich die erste Reihe von Dosieröffnungen 7, während sich im Bereich des in der Umfangsrichtung U gegenüberliegenden Randes der Ausgabeöffnung 22 die zweite Reihe von Dosieröffnungen 7' befindet. Demnach kommen alle Dosieröffnungen 7, 7' des aktuell dort befindlichen einen Dosierabschnittes 12 mit dem im Produktvorrat 4 bereitgehaltenen pulvrigen Produkt 1 in Kontakt und werden gleichzeitig in einem Arbeitstakt damit gefüllt.

Zur Unterstützung des Füllvorganges ist der Produktvorrat 4 mit einem optionalen Rührwerk versehen. Das Rührwerk umfasst unmittelbar angrenzend an die Ausgabeöffnung 22 zwei in der Umfangsrichtung U zueinander beabstandete Rührer 23, 25, welche vollständig in das pulvrige Produkt 1 eingetaucht sind. Die beiden Rührer 23, 25 weisen parallel zueinander und auch parallel zur Drehachse 19 liegende Rührerachsen 24 auf. Pfeile 33, 34 zeigen an, dass die beiden Rührer 23, 25 im Betrieb gegenläufig angetrieben werden, und zwar derart, dass sie sich auf ihrer der Dosierwalze 5 zugewandten Unterseite voneinander fort bewegen. Hierdurch wird erreicht, dass das pulvrige Produkt 1 nach außen zu den in der Umfangsrichtung U bzw. in der Drehrichtung 28 sich gegenüberliegenden Rändern der Ausgabeöffnung 22 bewegt wird, also dorthin, wo sich die Dosieröffnungen 7, 7' des aktuell dort positionierten Dosierabschnitts 12 befinden.

Optional kann oberhalb der beiden Rührer 23, 25 noch ein weiterer, hier zentral im Produktvorrat angeordneter Rührer 31 mit einer Rührerachse 32 vorgesehen sein. Außerdem ist der Produktvorrat 4 zur Sicherstellung eines gleichmäßigen Füllvorganges noch mit einem Niveausensor 6 versehen, über welchen der aktuelle Füllstand des Produkts 1 im Produktvorrat ermittelt wird, und über welchen als Teil eines Steuer- oder Regelungsprozesses eine Nachfüllung des Produkts zur Erzielung eines ausreichend gleichmäßigen Füllstandes im Produktvorrat 4 herbeigeführt werden kann.

Durch eine getaktete Drehbewegung wird der solchermaßen befüllte Dosierabschnitt 12 in der Drehrichtung 28 weiterbewegt. Eine nicht mitdrehende, in der Drehrichtung 28 dem Produktvorrat 4 nachgeschaltete und mit Federvorspannung auf der drehend fortbewegten Außenseite 29 der Dosierwalze 5 aufliegende Rakel 27 entfernt dabei eventuell an der Außenseite 29 anhaftende Produktreste. In einem ersten, optionalen Drehtakt erreicht der befüllte Dosierabschnitt 12 die nachfolgende, optionale erste Zwischenposition II, wo beispielsweise eine Füllstandskontrolle vorgenommen werden kann.

Nach einer weiteren getakteten Drehbewegung erreicht der genannte Dosierabschnitt 12 die untere Ausstoßposition III. Dort werden die Dosiermengen 2 aus sämtlichen ersten Dosieröffnungen 7 und sämtlichen zweiten Dosieröffnungen 7' dieses einen Dosierabschnittes 12 ausgestoßen und den Zielbehältern 21, 21' zugeführt. Hierzu sind die Zielbehälter 21, 21' korrespondierend zu den Dosieröffnungen 7, 7' in Anzahl und Position angeordnet: Erste Zielbehälter 21 sind in einer ersten Reihe parallel zur Drehachse 19 angeordnet. Zweite Zielbehälter 21' sind in einer zweiten Reihe parallel zur Drehachse 19 und auch parallel zur ersten Reihe von ersten Zielbehältern 21 angeordnet. In der Umfangsrichtung U weisen sie einen Abstand zueinander auf, der dem Abstand zwischen den ersten und zweiten Dosieröffnungen 7, 7' entspricht. Auch in Richtung der Drehachse 19 entspricht der Abstand zwischen den Zielbehältern 21, 21' dem Abstand zwischen den Dosieröffnungen 7, 7'. Bei der gezeigten praktischen Ausführung sind die Zielbehälter 21, 21' als Kapselunterteile zweireihig in einem Kapselunterteilhalter 35 einer Kapselfüllmaschine gehalten. In der unteren Ausstoßposition III fluchten die Öffnungsachsen a, a' der Dosieröffnungen 7, 7' mit den zugeordneten Zielbehältern 21, 21'. Infolge der Parallelität der Öffnungsachsen a, a' untereinander treffen die ausgestoßenen Dosiermengen 2 genau in die vorgesehenen Zielbehälter 21, 21'.

An der Ausstoßposition III kann noch optional zwischeneine der Dosierwalze 5 und den Zielbehältern 21, 21' eine hier nicht dargestellte Messvorrichtung, insbesondere eine kapazitive Messvorrichtung zur Massebestimmung der einzelnen Dosiermengen 2 angeordnet sein. Eine solche kapazitive Messvorrichtung wird auch als "Advanced Mass Verification System" oder AMV-System bezeichnet. Hiermit kann bei jeder einzelnen hindurchfallenden Dosiermenge 2 geprüft werden, ob die volumetrische Dosierung tatsächlich zu der gewünschten Zielmasse innerhalb einer bestimmten Toleranz geführt hat. Dichteschwankungen im Pulver, unvollständig gefüllte oder entleerte Dosieröffnungen 7, 7' oder dergleichen können auf diese Weise identifiziert werden.

Der nunmehr entleerte Dosierabschnitt 12 wird anschließend zur optionalen zweiten Zwischenposition IV weiterbewegt und kann dort beispielsweise durch Ausblasen gereinigt werden.

Die Dosieröffnungen 7, 7' sind wie oben schon erwähnt durch das jeweilige Filterelement 8 hindurch bei Bedarf mit einem gewünschten Druck beaufschlagbar. Im gezeigten bevorzugten Ausführungsbeispiel wird zumindest für den in der Füllposition I befindlichen Dosierabschnitt 12 ein Unterdruck gewählt und hierfür eine unterdruck-übertragende Verbindung zwischen dem Druckkanal 14 und einer Unterdruckquelle 15 hergestellt. Das Niveau des von der Unterdruckquelle 15 bereitgestellten Unterdrucks wird mittels eines schematisch angedeuteten Steuergeräts 18 eingestellt, was durch eine geeignete Steuerung, gegebenenfalls aber auch durch eine Regelung erfolgen kann. Jedenfalls überträgt sich der solchermaßen eingestellte Unterdruck durch den Drucckanal 14 der zugeordneten Filterleiste 11 und das Filterelement 8 hindurch in die Dosieröffnungen 7, 7' desjenigen Dosierabschnittes 12, welcher sich in der oberen Füllposition I befindet. Der Unterdruck saugt das pulvrige Produkt 1 aus dem Produktvorrat 4 in die Dosieröffnungen 7, 7'. Das Filterelement 8 ist hinsichtlich seiner Durchlässigkeit derart bemessen und auf das Produkt 1 abgestimmt, dass es zwar luftdurchlässig und damit auch druckübertragend ist, dass aber das pulvrige Produkt 1 zurückgehalten und am Durchtritt gehindert wird. Folglich entstehen einzelne Dosiermengen 2 des pulvrigen Produkts 1, welche die Dosieröffnungen 7, 7' vollständig ausfüllen, und deren Volumen dem Volumen der jeweiligen Dosieröffnungen 7, 7' entsprechen. Abhängig vom Niveau des herrschenden Unterdrucks und von den Eigenschaften des Produkts 1 stellt sich jedenfalls ein bestimmter Verdichtungsgrad des Produkts 1 in den Dosieröffnungen 7, 7' ein, so dass aus dem vorgegebenen Volumen der Dosieröffnungen 7, 7' auch eine bestimmte Masse der einzelnen Dosiermengen 2 folgt.

Der anliegende Unterdruck kann auf gleichem oder auch auf verringertem Niveau noch in der ersten Zwischenposition II und bis zum Erreichen der Ausstoßposition III aufrechterhalten werden, um ein vorzeitiges Herausfallen der Dosiermengen 2 aus den Dosieröffnungen 7, 7' zu verhindern. Spätestens beim Erreichen der unteren Ausstoßposition III wird jedoch die Unterdruckbeaufschlagung beendet. Stattdessen werden nun die Dosieröffnungen 7, 7' des in der Ausstoßposition III befindlichen Dosierabschnittes 12 durch die Filterelemente 8 hindurch mit einem Überdruck beaufschlagt. Hierzu wird eine überdruckübertragende Verbindung zwischen dem Druckkanal 14 der zugehörigen Filterleiste 11 und einer Überdruckquelle 16 hergestellt. Das Niveau des von der Überdruckquelle 16 bereitgestellten Überdrucks wird ebenso wie im vorgenannten Fall der Unterdruckquelle mittels des schematisch angedeuteten Steuergeräts 18 eingestellt. Der solchermaßen eingestellte Überdruck überträgt sich durch den Druckkanal 14 und das Filterelement 8 hindurch in die Dosieröffnungen 7, 7' des in der unteren Ausstoßposition III befindlichen Dosierabschnitts 12. Der Überdruck bläst die Dosiermengen 2 aus den Dosieröffnungen 7, 7' heraus. Ergänzend kann die Überdruckbeaufschlagung noch in der nachfolgenden zweiten Zwischenposition IV für den dortigen Reinigungsvorgang der entleerten Dosieröffnungen 7, 7' verwendet werden.

## Patentansprüche

1. Walzendosierer (3) zur Erzeugung einzelner Dosiermengen (2) eines pulvrigen Produkts (1), umfassend einen in einer Füllposition (I) angeordneten Produktvorrat (4), eine Dosierwalze (5), und einen Drehantrieb (M) für die Dosierwalze (5), wobei die Dosierwalze (5) umfangsseitig verteilt Dosieröffnungen (7, 7') aufweist,
**dadurch gekennzeichnet, dass** mindestens zwei in einer Umfangsrichtung (U) der Dosierwalze (5) zueinander beabstandete Dosieröffnungen (7, 7') zu einem gemeinsamen Dosierabschnitt (12) zusammengefasst sind, und dass der Drehantrieb (M) für eine getaktete Drehung der Dosierwalze (5) um eine Drehachse (19) derart ausgelegt ist, dass ein einzelner Dosierabschnitt (12) mit den zugehörigen Dosieröffnungen (7, 7') zyklisch zumindest in der Füllposition (I) und in einer Ausstoßposition (III) zu liegen kommt.

2. Walzendosierer nach Anspruch 1,
**dadurch gekennzeichnet, dass** im Dosierabschnitt (12) zwei in der Umfangsrichtung (U) zueinander beabstandete Reihen von Dosieröffnungen (7, 7') angeordnet sind.

3. Walzendosierer nach Anspruch 1 oder 2,
**dadurch gekennzeichnet, dass** der Dosierabschnitt (12) eine radial zur Drehachse (19) verlaufende Mittelebene (E) aufweist, wobei die Dosieröffnungen (7, 7') paarweise beidseitig der Mittelebene (E) angeordnet sind, und wobei die Dosieröffnungen (7, 7') Öffnungsachsen (a, a') aufweisen, welche parallel zueinander und zur Mittelebene (E) liegen.

4. Walzendosierer nach einem der Ansprüche 1 bis 3,
**dadurch gekennzeichnet, dass** der Produktvorrat (4) an der Füllposition (I) mittels einer Ausgabeöffnung (22) zur Dosierwalze (5) hin offen ist, wobei die Ausgabeöffnung (22) in der Umfangsrichtung (U) eine Breite (b) aufweist, welche die in der Umfangsrichtung (U) zueinander beabstandeten Dosieröffnungen (7, 7') überspannt.

5. Walzendosierer nach Anspruch 4,
**dadurch gekennzeichnet, dass** im Produktvorrat (4) angrenzend an die Ausgabeöffnung (22) zwei in der Umfangsrichtung (U) zueinander beabstandete Rührer (23, 25) für das Produkt (1) angeordnet sind.

6. Walzendosierer nach Anspruch 5,
**dadurch gekennzeichnet, dass** die beiden Rührer (23, 25) parallel zueinander und zur Drehachse (19) liegende Rührerachsen (24, 26) aufweisen und dabei gegenläufig antreibbar sind.

7. Walzendosierer nach einem der Ansprüche 1 bis 6,
**dadurch gekennzeichnet, dass** die einzelnen Dosieröffnungen (7, 7') innenseitig mittels eines Filterelements (8) begrenzt sind und durch das Filterelement (8) hindurch mit einer Unterdruckquelle (15) verbindbar sind.

8. Walzendosierer nach einem der Ansprüche 1 bis 7,
**dadurch gekennzeichnet, dass** die einzelnen Dosieröffnungen (7, 7') innenseitig mittels eines Filterelements (8) begrenzt sind und durch das Filterelement (8) hindurch mit einer Überdruckquelle (16) verbindbar sind.
